Europäisches Patentamt

European Patent Office

Office européen des brevets

(11) Veröffentlichungsnummer: **0 321 785**
**A2**

(12) **EUROPÄISCHE PATENTANMELDUNG**

(21) Anmeldenummer: **88120461.4**

(22) Anmeldetag: **07.12.88**

(51) Int. Cl.⁴: **G01N 25/30**

(30) Priorität: **21.12.87 DE 3743400**

(43) Veröffentlichungstag der Anmeldung:
**28.06.89 Patentblatt 89/26**

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Nuscheler, Franz, Dipl.-Ing.**
**Josephspitalstrasse 9**
**D-8000 München 2(DE)**

(54) **Sensoranordnung zum Nachweis von Gasen durch exotherme katalytische Reaktionen.**

(57) Die Sensoranordnung enthält einen mit einer Katalysatorschicht (9) versehenen Transistor (20). Der Nachweis der Gase erfolgt über die Temperaturerhöhung des Transistors (20) infolge einer exotermen, katalytischen Reaktion an der Katalysatoroberfläche, wobei die Katalysatorschicht (9) eine vorbestimmte Betriebstemperatur haben muß. Die Katalysatorschicht (9) wird durch die Verlustleistung des Transistors (20), der als Sensor wirkt, oder durch die Verlustleistung eines Heiztransistors (11) geheizt.

FIG 1

EP 0 321 785 A2

## Sensoranordnung zum Nachweis von Gasen durch exotherme katalytische Reaktionen

Die Erfindung betrifft eine Sensoranordnung mit einem ersten Transistor, der mit einer heizbaren Katalysatorschicht versehen ist und der als Gassensor wirkt, zum Nachweis von Gasen durch exotherme katalytische Reaktionen.

Es ist bekannt (siehe z. B. DE 35 19 397 A1), Sensoren, die nach dem Kalorimeterprinzip arbeiten, zur Gasanalyse zu verwenden. Die Sensoren enthalten einen temperaturempfindlichen Sensor, der von seiner Umgebung wärmeisoliert aufgebaut ist und der auf der dem Gas ausgesetzten Oberfläche eine Katalysatorschicht trägt. Die Katalysatorschicht ist so gewählt, daß das zu detektierende Gas an deren Oberfläche exotherm, d. h. unter Wärmeentwicklung, katalytisch z. B. mit dem Luftsauerstoff reagiert. In vielen Fällen ist für die katalytische Reaktion eine vorbestimmte Grundtemperatur des Katalysators notwendig. Platinkatalysatoren sind z. B. für die Verbrennung von Wasserstoff geeignet. Platin- oder Platin-Rhodium-Katalysatoren bei 200 bis 250° C eignen sich für die Erzeugung von NO aus NH3 unter Zugabe von Sauerstoff. NO verbrennt bei 100° C an einem Katalysator aus $Al_2O_3$-$SiO_2$-Gel zu $NO_2$. CO läßt sich bei Temperaturen ab 150° C an einem Katalysator aus Palladium zu $CO_2$ oxidieren.

Unter dem Namen "Pellistor" sind Gassensoren bekannt, die nach dem oben beschriebenen Prinzip arbeiten. (siehe z. B. English Electric Valce Company Limited, GB: Datenblatt) Ein Pellistor besteht aus einem Platinwiderstandsdraht, auf den eine poröse Keramikpille aufgesintert ist. Auf die Keramikpille ist ein Katalysator aufgebracht. Bei katalytischer Verbrennung des nachzuweisenden Gases ergibt sich für den Platinwiderstandsdraht eine meßbare Widerstands erhöhung. Weitere Sensoren sind aus English Electric Valve Company Limited, GB: Datenblatt, S.J. Gentry, A. Jones: J. appl. Chem. Biotechnol. 1978, 28, 727, S.J. Gentry, T.A. Jones: Sensors and Actuators, 4 (1983),581, S.J. Gentry. P.T. Walsh: Sensors and Actuators, 5 (1984), 229, F. Nuscheler: Proc. 2 international meeting on chemical sensors, 1986, p 235, O. Koeder: Dissertation am Lehrst. f. Technische Elektronik, 1986, K. Hardtl, W. Kubler, J. Riegel: Sensoren-Technologie und Anwendung NTG-Fachberichte 93, Bad Nauheim, 1986, 97 bekannt.

Es hat sich als vorteilhaft erwiesen, derartige Sensoren in Halbleitertechnolgie zu fertigen (siehe z. B. DE 35 19 397 A1). Aus F. Nuscheler: Proc. of the second international meeting on chemical sensors, 1986, S. 235 f ist die Verwendung eines mit einer Katalysatorschicht versehenen Transistors als Gassensor bekannt. Wegen der hohen Temperaturempfindlichkeit eignet sich ein Transistor besonders gut als Temperatursensor. Durch einen regelbaren Widerstand, der zwischen Basis und Emitter des Transistors geschaltet wird, läßt sich der elektrische Arbeitspunkt des Temperatursensors in einem weiten Temperaturbereich konstant halten. Da die Katalysatorschicht im allgemeinen eine Betriebstemperatur über 100° C erfordert, ist eine externe Heizung zum Aufrechterhalten der Betriebstemperatur vorgesehen.

Externe Heizungen haben im allgemeinen einen recht hohen Platzbedarf, was in vielen Anwendungen störend ist.

Der Erfindung liegt die Aufgabe zugrunde, eine Sensoranordnung mit einem kompakten Aufbau anzugeben.

Die Aufgabe wird erfindungsgemäß mit einer Sensoranordnung nach dem Oberbegriff des Anspruchs 1 gelöst, wie dies im kennzeichnenden Teil des Anspruchs 1 angegeben ist.

Die Sensoranordnung nach Anspruch 2 hat den Vorteil eines sehr geringen Platzbedarfes.

Die Sensoranordnung nach Anspruch 3 hat den Vorteil, daß der Gassensor und das Heizelement als ein integriertes Bauteil realisiert sind. Die Anordnung läßt sich mit Hilfe der Halbleitertechnologie besonders billig herstellen.

Die Sensoranordnung nach Anspruch 4 enthält ein Referenzelement, das von Gassensoren thermisch isoliert ist. Das hat den Vorteil, daß beim Nachweis von Gasen Effekte die z. B. auf eine Änderung der Umgebungstemperatur zurückgehen, kompensiert werden können. Auch dieser integrierte Aufbau läßt sich mit Hilfe der Halbleitertechnologie besonders billig herstellen.

Die Sensoranordnung nach Anspruch 5 enthält einen Temperaturfühler. Dadurch kann während der Messung die Absoluttemperatur der Sensoranordnung überwacht werden und eine eventuelle Zerstörung der Sensoranordnung durch Überhitzung vermieden werden. Auch dieser integrierte Aufbau läßt sich dank der Halbleitertechnologie billig herstellen.

Die Erfindung wird im folgenden anhand von Ausführungs-beispielen, die in den FIG dargestellt sind, näher erläutert.

FIG 1 zeigt einen Schnitt durch einen Transistor, der mit einer Katalysatorschicht versehen ist.

FIG 2 zeigt das Schaltbild für einen Transistor, der als Gassensor und gleichzeitig als Heizelement verwendet wird.

FIG 3 zeigt das elektrische Schaltbild für einen Transistor, der als Gassensor verwendet wird.

FIG 4 veranschaulicht die Temperaturabhängigkeit eines Transistors.

FIG 5 zeigt eine Anordnung, die einen Transistor als Heizelement und einen Transistor zum Gasnachweis in einer Isolation enthält.

FIG 6 zeigt eine Anordnung, die einen Transistor zum Gasnachweis, ein Heizelement und einen Temperaturfühler enthält und in der ein Referenzelement vorgesehen ist.

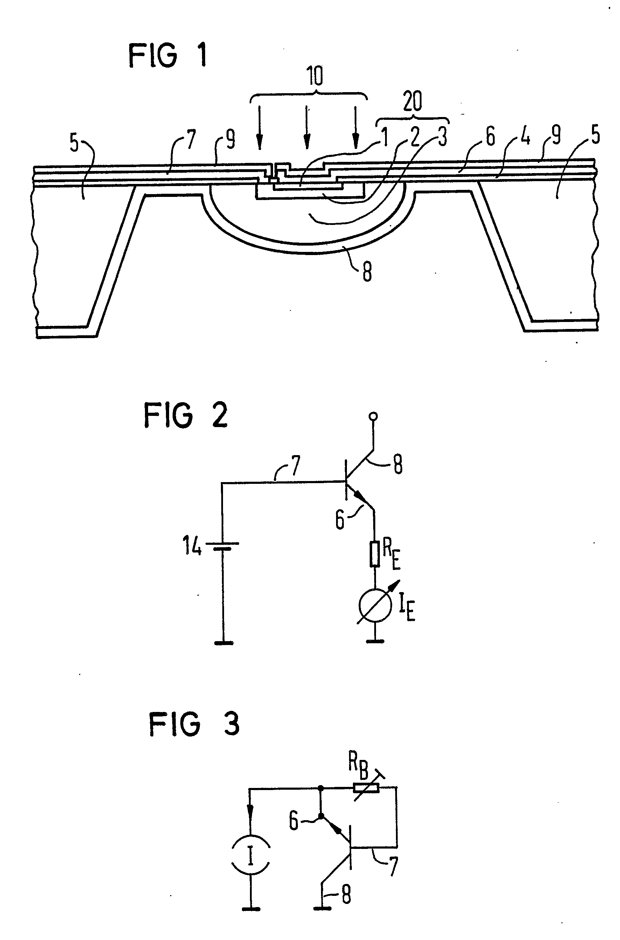

In FIG 1 ist ein erster Transistor 20 dargestellt, der sowohl zum Gasnachweis als auch als Heizelement dient. Es handelt sich um einen bipolaren Transistor, der einen Emitter 1, eine Basis 2, und einen Kollektor 3 enthält. Der erste Transistor 20 ist über eine Isolationsmembran 4 an einem Substrat 5 aufgehängt. Die Isolationsmembran 4 besteht z. B. $Si_3N_4$ und hat z. B. eine Dicke von etwa 0,5 $\mu$m. Sie stellt sicher, daß der erste Transistor 20 thermisch von dem Substrat 5 isoliert ist. Der erste Transistor 20 weist einen Emitterkontakt 6 und einen Basiskontakt 7 auf. Der Emitterkontakt 6 und der Basiskontakt 7 bestehen z. B. aus Aluminium. Der erste Transistor 20 ist z. B. auf Silizium aufgebaut. Er ist dann geeignet für den Betrieb bei Temperaturen zwischen 100$^\circ$C und 250$^\circ$C. Für den Betrieb bei höheren Temperaturen eignen sich Transistoren aus einem Halbleitermaterial mit größerem Bandabstand, z. B. aus GaAs. Auf der Rückseite des ersten Transistors 20 ist ein Kollektorkontakt 8 aufgebracht. Da der Kollektorkontakt 8 eine Verbindung zwischen dem Kollektor 3, und damit dem ersten Transistor 20, und dem Substrat 5 darstellt, muß er aus einem Material mit möglichst geringer Wärmeleitfähigkeit hergestellt werden, um die Temperaturisolation des ersten Transistors 20 nicht zu zerstören. Andererseits muß der Kollektorkontakt 8 aus einem Material mit elektrischer Leitfähigkeit hergestellt sein. Der Kollektorkontakt 8 ist z. B. aus Titan hergestellt, das eine etwa 15-mal schlechtere Temperaturleitfähigkeit als Aluminium aufweist. Auf den Emitterkontakt 6 und den Basiskontakt 7 ist eine Katalysatorschicht 9 aufgebracht. Die Katalysatorschicht 9 hat eine Dicke von z. B. etwa 100 bis 150 nm und besteht aus z. B. Palladium oder Platin. Es ist möglich, Katalysatorschichten mit kleineren Dicken bis etwa 10 nm zu verwenden.

Im Betrieb als Gassensor wird dem Transistor im Emitterbasiskreis eine elektrische Leistung z. B. in Form einer Spannungseinprägung über eine Spannungsquelle 14 zugeführt (siehe FIG 2). Der Emitterkontakt 6 ist über einen Widerstand $R_E$ und ein Strommeßgerät $I_E$ mit der Spannungsquelle verbunden. Der erste Transistor 20 wird durch diese elektrische Leistung aufgeheizt. Die elektrische Leistung wird so gewählt, daß der erste Transistor 20 und damit die Katalysatorschicht 9 die erforderliche Betriebstemperatur erreichen. Es stellt sich ein vorgegebener Emitterstrom ein, der mit dem Strommeßgerät $I_E$ gemessen wird. Das nachzuweisende Gas wirkt in der Richtung, die in FIG 1 als Pfeile 10 angedeutet ist, auf die Katalysatorschicht 9 ein. An der Oberfläche der Katalysatorschicht 9 reagiert das nachzuweisende Gas katalytisch und exotherm. Bei der Reaktion des nachzuweisenden Gases an der Katalysatorschicht 9 wird Wärme frei. Diese Wärme führt zu einer weiteren Erwärmung des ersten Transistors 20. Diese Erwärmung des ersten Transistors 20 führt zu einer Änderung des Emitterstroms, die am Strommeßgerät $I_E$ registriert wird. Aus dieser Veränderung des Emitterstroms gegenüber dem vorgegebenen Wert wird auf die Temperatur des ersten Transistors 20 und damit auf das Gas geschlossen. Der Widerstand $R_E$ wirkt als Gegenkopplung. Eine Gegenkopplung ist wichtig, um den Emitterkontakt vor Zerstörung durch thermische Rückkopplung zu schützen.

Wird der Transistor nur als Gassensor betrieben, wird zwischen dem Emitterkontakt 6 und den Basiskontakt 7 ein regelbarer Widerstand $R_B$ geschaltet (siehe FIG 3). Über eine Stromquelle I wird dem ersten Transistor 20 ein Strom aufgeprägt. Je nach Temperatur des Transistors stellt sich zwischen Emitterkontakt 6 und Kollektorkontakt 8 ein vorgegebener Spannungswert ein.

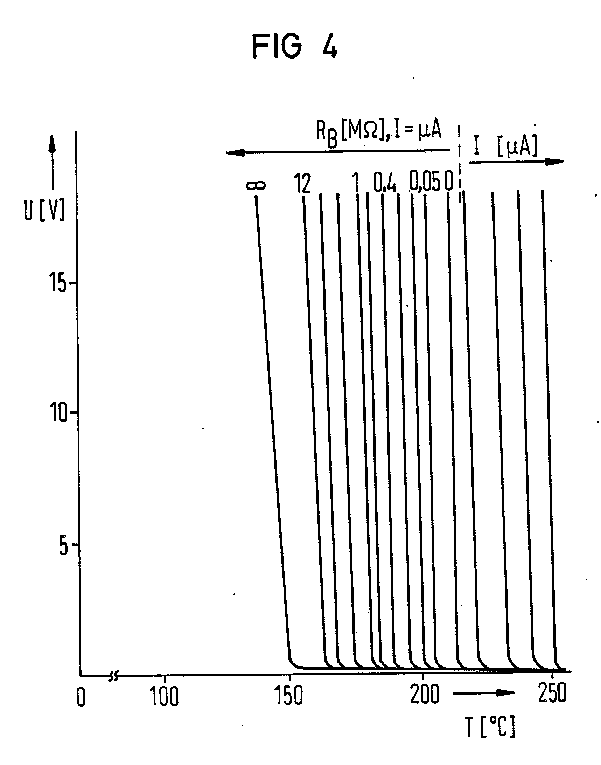

Zur Veranschaulichung ist in FIG 4 die Abhängigkeit der Spannung U zwischen Emitterkontakt 6 und Kollektorkontakt 8 von der Temperatur T des ersten Transistors 20 dargestellt, für verschiedene Widerstandswerte des regelbaren Widerstandes $R_B$. Der Verlauf der Kurven ist sehr steil. Die Kurven lassen sich durch Variation des Wertes des regelbaren Widerstandes $R_B$ bei konstanter Stromeinprägung bzw. durch Steigerung der Stromeinprägung bei einem konstanten Wert von 0 $\Omega$ für den regelbaren Widerstand $R_B$ über einen weiten Temperaturbereich verschieben.

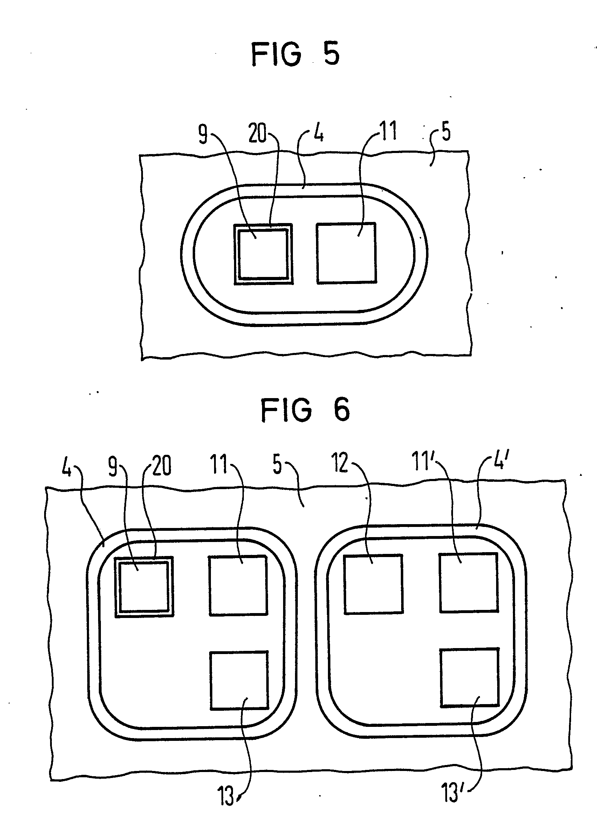

In FIG 5 ist eine weitere Ausführungsform der Erfindung dargestellt. Ein Heiztransistor 11 ist in einem integrierten Aufbau mit dem ersten Transistor 20 realisiert. Der erste Transistor 20 trägt die Katalysatorschicht 9. Es ist vorteilhaft, als Heiztransistor 11 einen Transistor gleicher Bauart wie den ersten Transistor 20 zu wählen. Dann ist es möglich, beide Transistoren in einem Prozeß herzustellen. Der Heiztransistor 11 und der erste Transistor 20 sind durch die Isolationsmembran 4 von dem Substrat 5 thermisch isoliert. Im Betrieb wird dem Heiztransistor 11 eine solche Leistung aufgeprägt, daß er sich selber, den ersten Transistor 20 und die Katalysatorschicht 9 auf die erforderliche Betriebstemperatur aufheizt. Bei Einwirken eines nachzuweisenden Gases auf die Katalysatorschicht 9 wird wiederum aus der Variation des Arbeitspunktes des ersten Transistors 20 auf die Temperatur des ersten Transistors 20 und damit die Gasart geschlossen. Der Aufbau der Transistoren sowie die Isolationsmembran 4 und das Substrat 5 und die Katalysatorschicht 9 sind so, wie zu FIG 1 erläutert.

FIG 6 zeigt ein weiteres Ausführungsbeispiel der Sensoranordnung. In einem integrierten Aufbau sind der erste Transistor 20 und der Heiztransistor 11 vorgesehen. Es ist weiterhin ein Temperaturfühler 13 vorgesehen. Der Temperaturfühler 13 ist ebenfalls ein Transistor. Diese drei Bauelemente sind wiederum mit Hilfe der Isolationsmembran 4 am Substrat 5 thermisch isoliert aufgehängt. Der Aufbau der Transistoren ist so, wie zu FIG 1 beschrieben.

Ferner enthält das Substrat 5 eine weitere Isolationsmembran 4', mit der ein Referenztransistor 12, ein weiterer Heiztransistor 11' und ein weiterer Temperaturfühler 13' am Substrat 5 aufgehängt sind. Der weitere Heiztransistor 11' und der Heiztransistor 11 sowie der weitere Temperaturfühler 13' und der Temperaturfühler 13 sind baugleich. Der Referenztransistor 12 ist baugleich mit dem ersten Transistor 20. Der Referenztransistor 12 unterscheidet sich von dem ersten Transistor 20 nur darin, daß er keine Katalysatorschicht trägt. Es ist empfehlenswert, alle Transistoren in einem Prozeß herzustellen.

Im Betrieb dieser Sensoranordnung wird dem Heiztransistor 11 und dem weiteren Heiztransistor 11' eine solche Leistung zugeführt, daß der erste Transistor 20 und die Katalysatorschicht 9 sowie der Temperaturfühler 13 bzw. der Referenztransistor 12 und der weitere Temperaturfühler 13' auf die erforderliche Temperatur aufgeheizt werden. Mit dem Temperaturfühler 13 wird die Absoluttemperatur des Aufbaus überwacht. Beim Einwirken eines nachzuweisenden Gases auf die Anordnung kommt es an der Oberfläche der Katalysatorschicht 9 zu einer exothermen Reaktion. Dadurch erhitzt sich der erste Transistor 20, und es kommt zu einer Verschiebung des Arbeitspunktes des ersten Transistors 20. Der Referenztransistor 12, der keine Katalysatorschicht zeigt und der baugleich mit dem ersten Transistor 20 ist, behält seinen Arbeitspunkt unverändert bei. Es kann daher die Verschiebung des Arbeitspunktes des ersten Transistors 20 im Verhältnis zum Arbeitspunkt des Referenztransistors 12 gemessen werden. In dieser Relativmessung können sehr viel geringere Verschiebungen des Arbeitspunktes registriert werden, als dies in einer Absolutmessung möglich ist.

## Ansprüche

1. Sensoranordnung mit einem ersten Transistor, der mit einer heizbaren Katalysatorschicht versehen ist und der als Gassensor wirkt, zum Nachweis von Gasen durch exotherme katalytische Reaktionen, dadurch **gekennzeichnet,** daß als Heizquelle für die Katalysatorschicht (9) ein Heiztransistor vorgesehen ist.

2. Sensoranordnung nach Anspruch 1, dadurch **gekennzeichnet,** daß der erste Transistor (20) als Heiztransistor vorgesehen ist.

3. Sensoranordnung nach Anspruch 1, dadurch **gekennzeichnet,** daß der erste Transistor (20) und der Heiztransistor (11) in einem Halbleitersubstrat (5) als integrierter Aufbau realisiert sind, der thermisch isoliert ist.

4. Sensoranordnung nach Anspruch 3, dadurch **gekennzeichnet,** daß der integrierte Aufbau weiterhin einen zweiten Transistor (12) enthält, der vom ersten Transistor (20) thermisch isoliert ist, der mit dem ersten Transistor (20) baugleich ist, der aber keine Katalysatorschicht trägt und der als Referenzelement verwendbar ist.

5. Sensoranordnung nach Anspruch 3 oder 4, dadurch **gekennzeichnet,** daß der integrierte Aufbau weiterhin einen dritten Transistor (13) enthält, der als Temperaturfühler einsetzbar ist.

FIG 1

FIG 2

FIG 3

# FIG 4

# FIG 5

9  20  4  11  5

# FIG 6

4  9  20  11  5  12  11'  4'

13  13'